# EUROPÄISCHE PATENTANMELDUNG

(11) **EP 3 290 607 A1**
(43) Veröffentlichungstag der Anmeldung: **07.03.2018**
(21) Anmeldenummer: 16186391.5
(22) Anmeldetag: 30.08.2016
(51) Int. Cl.: E04B 1/86, E04B 1/94, B32B 21/02, E04C 2/24, E04D 13/16

(54) **KAOLINHALTIGE DÄMMPLATTE**

(71) Anmelder: Pavatex SA, 1701 Fribourg (CH)
(72) Erfinder: Lucjan, Tomasz, 6330 Cham (CH); Wildhaber, Reto, 6330 Cham (CH)
(74) Vertreter: Nuss, Laurent

(57) **Zusammenfassung**

Die Erfindung betrifft Dämmplatten, welche als Trägerplatte Holzfaserplatte(n) mit homogen verteiltem Kaolin enthält. Derartige Dämmplatten weisen unerwartet gute Werte für Feuerbeständigkeit, Schalldämmung und Stabilität auf. Die Erfindung betrifft ferner die Herstellung und Verwendung solcher Dämmplatten.

## Beschreibung

Die Erfindung betrifft Dämmplatten, welche als Trägerplatte Holzfaserplatte(n) mit homogen verteiltem Kaolin enthält. Derartige Dämmplatten weisen eine unerwartet hohe Feuerbeständigkeit und Schalldämmung und Festigkeit auf. Die Erfindung betrifft ferner die Herstellung und Verwendung solcher Dämmplatten.

Dämmplatten, enthaltend oder bestehend aus Holzfaserplatten, insbesondere Holzweichfaserplatten, sind an sich bekannt und für das Bauwesen normiert , vgl. EN 13171 und EN 622-4. Solche Dämmplatten zeigen gute Eigenschaften in Bezug auf thermische Dämmung, sind am Markt etabliert und finden Anwendung in vielen Bereichen. Solche Dämmplatten sind jedoch aufgrund ihrer Bestandteile entflammbar. Auch zeigen solche Dämmplatten teilweise ungenügende Schalldämmung. Ferner zeigen solche Dämmplatten geringe Werte für Festigkeit, insbesondere Zugfestigkeit senkrecht zur Plattenebene, Druckfestigkeit beobachtet. Daraus ergeben sich Einschränkungen bei der Anwendung dieser Dämmplatten und auch Schwierigkeiten bei der Nachbearbeitung, z.B. beim Fräsen.

EP 0563536 beschreibt Isolierkörper aus aufgefasertem Zellulosematerial, enthaltend Wasserglas und eine feuerhemmende Salzlösung. Durch eine feuerhemmende Komponente in diesen Isolierkörpern, insbesondere Borsalze werden erwähnt, wird das Brandverhalten verbessert. Solche feuerhemmenden Salze sind gesundheitlich nicht unbedenklich.

DE202012013058 beschreibt mehrschichtige feuerbeständige Isolierplatten. Gemäss diesem Dokument kann eine der Schichten als Zusatzstoff Kaolin enthalten und eine davon separiert weitere Schicht kann aus Holzfasern bestehen. Die in diesem Dokument beschriebene Platte wird nach einem aufwändigen, mehrstufigen Verfahren hergestellt und ist auch in der Nachbearbeitung schwierig zu handhaben.

Aufgabe der Erfindung ist es daher, eine Dämmplatte zu schaffen, bei der die oben genannten Nachteile des Standes der Technik teilweise oder vollständig vermieden werden. Insbesondere ist es erstrebenswert, eine feuerbeständige Dämmplatte zur Verfügung zu stellen. Erstrebenswert ist es auch, eine Dämmplatte mit verbesserten Werten für Schalldämmung zur Verfügung zu stellen. Erstrebenswert ist es ferner, eine Dämmplatte mit verbesserten Werten für Festigkeit, Zugfestigkeit senkrecht zur Plattenebene und Druckfestigkeit zur Verfügung zu stellen. Schlussendlich ist es ein Ziel, Dämmplatten zur Verfügung zu stellen, die einfach zu produzieren sind und /oder einfach nachbearbeitet werden können.

Eine oder mehrere der vorstehend umrissenen Aufgaben werden gemäss den unabhängigen Ansprüchen gelöst. Die abhängigen Ansprüche stellen vorteilhafte Ausführungsformen dar. Weitere vorteilhafte Ausführungsformen sind der Beschreibung und den Figuren zu entnehmen.

Die vorliegende Erfindung wird nachstehend detailliert beschrieben. Es versteht sich, dass die verschiedenen nachstehend offenbarten und beschriebenen Ausführungsformen, Bevorzugungen und Bereiche beliebig miteinander kombiniert werden können. Ausserdem können, in Abhängigkeit von der Ausführungsform, einzelne Definitionen, Bevorzugungen und Bereiche nicht zur Anwendung kommen. Ferner schliesst der Begriff "umfassend" die Bedeutungen "enthaltend" und "bestehend aus" ein.

Die in der vorliegenden Erfindung verwendeten Begriffe werden im allgemein üblichen, dem Fachmann geläufigen Sinn verwendet. Sofern sich aus dem direkten Zusammenhang keine andere Bedeutung ergibt, haben die folgenden Begriffe dabei insbesondere die hier angegebene Bedeutung / **Definitionen.**

**"Holzfaserplatte"** (auch "Holzfaserdämmplatte" genannt) bezeichnet an sich bekannte Platten die typischerweise zu 80 - 95 Vol.-% aus Holzfasern, welche aus Sägeresten (Schwarten, Speissel) und/oder Hackschnitzeln gewonnen werden, bestehen. Holzfaserplatten können nach dem Nassverfahren oder nach dem Trockenverfahren hergestellt sein. Bevorzugt sind Holzfaserplatten, deren Holzfasern überwiegend oder ausschließlich von Nadelhölzern gewonnen werden. Holzfaserplatten weisen zwei paar Schnittkanten auf ("Kantenflächen") sowie eine Ober- und Unterseite, welche typischerweise nicht unterscheidbar sind ("Seitenflächen" bzw. "Flächen")

**"Kaolin"** bezeichnet das bekannte Mineral, welches als Hauptbestandteil Kaolinit enthält. Weitere Bestandteile des Kaolin sind insbesondere andere Tonminerale und nicht zersetzter Feldspat.
Vorteilhaft weist das Kaolin einen hohen Reinheitsgrad auf, d.h. der Gehalt an weiteren Bestandteilen im Kaolin ist niedrig. Die Reinheit kann über den Weissgehalt (Weissgrad der trockenen Reflexion) bestimmt werden; vorteilhaft ist dieser mindestens 80%.
Vorteilhaft weist das Kaolin eine hohe spezifische Oberfläche auf. Die gewünschte hohe spezifische Oberfläche kann bspw. durch kleine Korngrössen des Kaolins erreicht werden. Diese kann durch Siebanalyse bestimmt werden; vorteilhaft sind zumindest 40% <2 Mikrometer und zumindest 30% <1 Mikrometer; besonders vorteilhaft sind zumindest 50% y 2 Mikrometer und zumindest 35% <1 Mikrometer.

**"Wasserglas"** bezeichnet die bekannten, aus einer Schmelze erstarrten, glasartigen, wasserlöslichen Natrium-, Kalium- und/oder Lithiumsilicate. Der Begriff umfasst sowohl die wässrigen Lösungen als auch das feste Material. Der Begriff umfasst ferner die einfachen bzw. ungefüllten Wassergläser sowie die gefüllten Wassergläser und deren jeweiligen Lösungen.

**"Klebstoff"** bezeichnet Materialien, welche Holzfaserplatten durch Flächenhaftung und innere Festigkeit, d.h. Adhäsions- und Kohäsionskräfte, verbinden können. Der Begriff umfasst Heissklebstoffe (d.h. Lösemittel freie Klebstoffe) und Kaltklebstoffe / (d.h. lösemittelhaltige Klebstoffe, wasserbasierte Klebstoffe und Dispersionsklebstoffe). Heissklebstoffe werden auch als Heissleim, Kaltklebstoffe werden auch als Kaltleim bezeichnet.

**Prozentangaben** beziehen sich, so nicht anders erwähnt, auf Gewichts-Prozent.

Die vorliegende Erfindung wird weiterhin durch die **Figuren** illustriert.

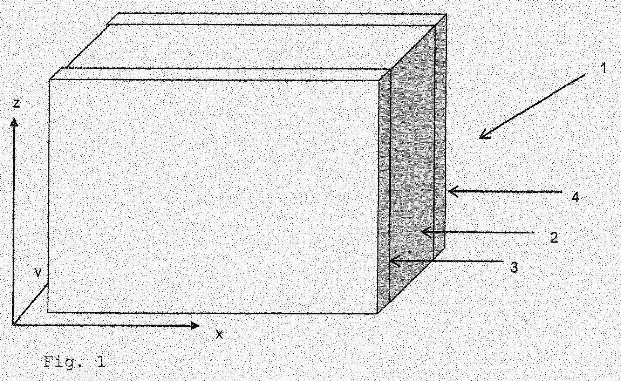

**Fig. 1** zeigt perspektivisch aber nicht massstäblich den Aufbau einer erfindungsgemässen Dämmplatte (1), aus einschichtiger kaolinhaltiger Trägerplatte (2), mit Beschichtungen (3, 4).

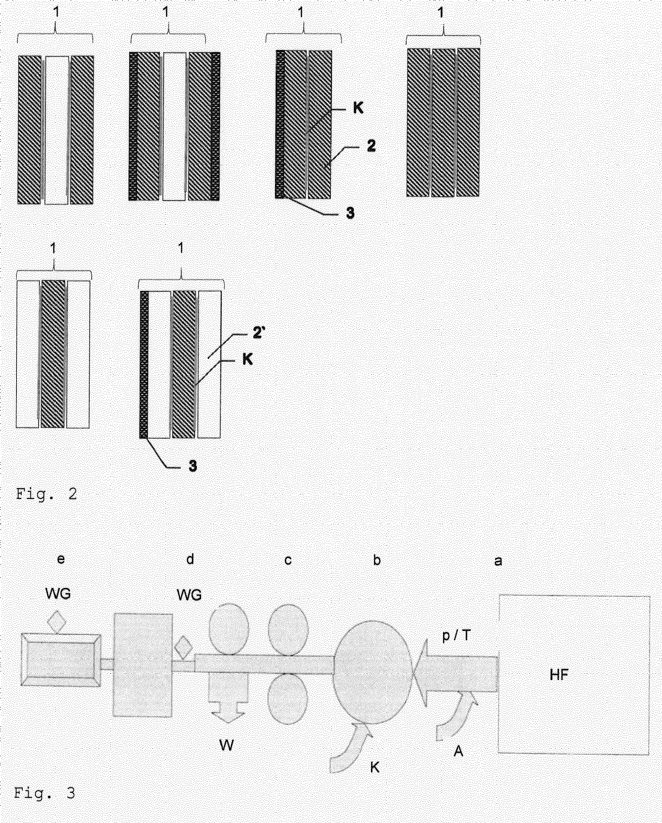

**Fig. 2** zeigt den schematischen Aufbau verschiedener alternativer erfindungsgemäßen Dämmplatten (1), aus mehrlagigen Trägerplatten (2,2'), erster Beschichtung (3) im Querschnitt. Die Trägerplatte (2) enthält Schichten die Kaolinhaltig sind (dunkel, (2)) solche, die Kaolin-frei sind (hell, (2')) sowie ggf. Klebschichten (K). In der oberen Reihe sind Ausführungsformen dargestellt, in welcher die kaolinhaltige Trägerplatte aussen angeordnet ist; in der unteren Reihe sind Ausführungsformen dargestellt, in der die kaolinfreie Trägeplatte aussen angeordnet ist.
**Fig. 3** zeigt ein Flussdiagramm welches die Herstellung der erfindungsgemässen Dämmplatten beschreibt; die einzelnen Schritte sind wie in der Beschreibung dargelegt angegeben und erfolgen (vorzugsweise kontinuierlich) von rechts nach links. In (a) werden Holzfasern (HF) und Additive (A) vorgelegt; in (b) wird Kaolin (K) homogen darin verteilt; in (c) erfolgt die Bildung eines Faserformstranges; in (d) erfolgt das Entwässern, das Trocknen und gegebenenfalls das Aufgiessen des Wasserglases; in (e) die Konfektionierung und/oder die Beschichtung mit Wasserglas In einem **ersten Aspekt** betrifft die Erfindung somit eine Dämmplatte (1), umfassend eine Trägerplatte (2), ggf. eine erste Beschichtung (3) und ggf. eine zweite Beschichtung (4), dadurch gekennzeichnet, dass die Trägerplatte (2) eine ein- oder mehrschichtige Holzfaserplatte mit einer Dicke von 10 - 60 mm und eine Rohdichte von 180 - 350 kg/m³ ist; Kaolin in einer Menge von 5-30 % enthält welches homogen in dieser Trägerplatte verteilt ist. Es wurde überraschend gefunden, dass die homogene Verteilung von Kaolin in der Trägerplatte (2) zu einer Reihe von verbesserten Eigenschafteen der Dämmplatte (1) führt. Zum einen werden die Eigenschaften bezüglich der Brennbarkeit signifikant verbessert. Des Weiteren sind die Dämmplatten (1) einfacher nachzubearbeiten, insbesondere können diese leichter gesägt oder gefräst werden. Schlussendlich sind die mechanischen Eigenschaften, insbesondere Festigkeit, Zugfestigkeit senkrecht zur Plattenebene, Druckfestigkeit verbessert. Dieser Aspekt der Erfindung soll nachstehend näher erläutert werden:
   Der Begriff **Dämmplatte** ist allgemein bekannt; insbesondere betrifft er einen flächigen Formkörper mit zwei gegenüberliegenden Kantenpaaren und den Deckflächen (x-z Ebene) welche ggf. mit der hier beschriebenen Beschichtung versehen sind. In einer vorteilhaften Ausführungsform betrifft die Erfindung eine Dämmplatte wie hier beschreiben, wobei die Dämmung eine Wärme-Dämmung ist ("Wärmedämmplatte"). Solche Dämmplatten haben typischerweise eine Wärmeleitfähigkeit von weniger als 0,05 bevorzugt weniger als 0.048, besonders bevorzugt weniger als 0.045 W/mK.

Der Begriff **Holzfaserplatte** wurde vorstehend erläutert; vorteilhaft werden solche Holzfaserplatten verwendet, welche der DIN-EN 13171 entsprechen.
Geeignete Holzfaserplatten enthalten Kaolin zu 5-30%; bevorzugt zu 5-15%. Erfindungsgemäß ist dieses Kaolin homogen in der Platte verteilt. Eine derartige homogene Verteilung kann durch das nachstehend beschriebene Herstellungsverfahren erreicht werden. Unter homogener Verteilung von Kaolin ist ein gleichbleibender, oder im wesentlichen gleichbleibender, Kaolingehalt entlang x-y und x-z und y-z Richtung innerhalb einer Holzfaserplatte zu verstehen. Typischerweise sind die Konzentrationsunterschiede innerhalb einer Platte kleiner als 2%, insbesondere kleiner als 1%. Eine derartige homogene Verteilung unterscheidet sich somit von einer schichtartigen Struktur, in der bspw. eine Mehrlagige Dämmplatte einen individuellen Bereich mit hoher Kaolinkonzentration, bspw. als Beschichtung, enthält.
Kaolin beeinflusst die Dichte, den Schallschutz, den Brandschutz und die Stabilität positiv. Geeignete Mengen an Kaolin hängen von der angestrebten Verwendung ab und liegen im Bereich von 5-30%, bevorzugt 5-15%, bezogen auf die Trägerplatte. Bei mehrlagigen Trägerplatten können eine oder mehrere der einzelnen Lagen Kaolin wie nachstehend beschrieben enthalten.
Die Dimensionen für geeignete Holzfaserplatten können in weiten Bereichen variieren und hängen unter anderem von produktions-technischen Überlegungen ab. Geeignet sind bspw. Holzfaserplatten mit einer Dicke von 8 - 60 mm, bevorzugt 10 - 30 mm. Die Dichten für geeignete Holzfaserplatten können in weiten Bereichen variieren und hängen unter anderem vom angestrebten Verwendungszweck ab. Geeignet sind bspw. Holzfaserplatten mit einer Rohdichte von 180 - 350 kg/m³, bevorzugt 180-220 kg/m³. Solche Platten können nach bekannten Methoden hergestellt werden und nach an sich bekannten Methoden zu den erfindungsgemäßen Dämmplatten verarbeitet werden.

Die erfindungsgemäßen Dämmplatten können einen **einlagigen** oder einen **mehrlagigen Aufbau** aufweisen.
**einlagiger Aufbau:** In einer vorteilhaften Ausführungsform betrifft die Erfindung daher eine Dämmplatte wie hier beschreiben, wobei die Trägerplatte (2) aus einer einzelnen Platte mit einer Rohdichte von 180-350 kg/m³ besteht; dies ist in Fig. 1 dargestellt. Solche Dämmplatten weisen typische Dicken von 8 - 60 mm auf.
**mehrlagiger Aufbau:** In einer weiteren vorteilhaften Ausführungsform betrifft die Erfindung daher eine Dämmplatte wie hier beschrieben, wobei die Trägerplatte (2) aus zwei oder mehr vollflächig oder teilflächig (bspw. in Streifen) miteinander verleimten Holzfaserplatten besteht; diese Verleimung ist in Fig. 2 durch Element (K) schematisch dargestellt. Als Komponente (K) können die o.g. Klebstoffe und / oder Wasserglas verwendet werden. Die für die hier beschriebene Trägerplatte verwendeten Holzfaserplatten können, müssen aber nicht, identisch sein. Solche Dämmplatten können neben den hier beschriebenen kaolin-haltigen Holzfaserplatten auch noch kaolin-freie Holzfaserplatten (2') enthalten. Solche mehrlagige Dämmplatten weisen typische Dicken von 30-60 mm auf und Rohdichten von 150-200 auf.
In einer Ausgestaltung sind solche kaolin-freien Holzfaserplatten (2') mittig angeordnet und entsprechen maximal 50%, typischerweise weniger als 30% des Plattenmaterials (vgl. Fig. 2 unten). Eine mittige Anordnung der kaolin-freien Holzfaserplatten gewährt einen guten Feuerschutz für viele Anwendungen, trägt aber auch Kostenaspekten und Flächengewicht der Platte Rechnung.
In einer weiteren Ausgestaltung sind solche kaolin-freien Holzfaserplatten (2') aussen angeordnet und entsprechen maximal 50%, typischerweise weniger als 30% des Plattenmaterials. Eine aussenliegende Anordnung der kaolin-freien Holzfaserplatten gewährt einen guten Schallschutz für viele Anwendungen, trägt aber auch Kostenaspekten und Flächengewicht der Platte Rechnung.

Die erfindungsgemäßen Dämmplatten können eine **einseitige** oder eine **beidseitige Beschichtung** aufweisen.
In einer vorteilhaften Ausführungsform betrifft die Erfindung daher eine Dämmplatte wie hier beschreiben, wobei die Trägerplatte eine erste Beschichtung (3) aufweist.

In einer weiteren vorteilhaften Ausführungsform betrifft die Erfindung daher eine Dämmplatte wie hier beschreiben, wobei die Trägerplatte eine erste Beschichtung (3) und eine zweite Beschichtung (4) aufweist.
In einer vorteilhaften Ausführungsform betrifft die Erfindung eine Dämmplatte wie hier beschreiben, wobei die erste und die ggf. vorhandene zweite Beschichtung die Flächen der Trägerplatte vollständig bedecken.

Vorteilhafte Beschichtungsmaterialien umfassen **Wasserglas** und Wasserglas enthaltende Zusammensetzungen. Der Begriff Wasserglas wurde vorstehend erläutert. Besonders geeignet ist Natriumwasserglas, speziell bevorzugt wird ein Wasserglas mit einem Molverhältnis von SiO2 : Na2O von 3.2 bis 2.6 eingesetzt.
Besonders geeignet sind ferner mineralisch gefüllte Wassergläser. Die Viskosität und das Brandschutzverhalten können durch die Beimischung von Füllstoffen, insbesondere mineralischen Füllstoffen, z.B. als "Steinbruch" bekannte Alkalisilikate, beeinflusst werden. Als "Steinbruch" bezeichnet werden Alkalisilikate, die in der Natur abgebaut und lediglich gemahlen werden, im Unterschied zu chemisch gefällten Alkalisilikaten. Das bevorzugt eingesetzte mineralisch gefüllte Wasserglas hat einen Wasserglasanteil von 25 bis 60 %, insbesondere von 25 bis 55 %, und einen Füllstoffanteil derart, dass die Gesamtzusammensetzung eine Viskosität von 700 bis 1300 mPas aufweist. Dies wird üblicherweise mit Gehalten an mineralischen Füllstoffen von bis. ca. 35 %, insbesondere bis ca. 30 %, bezogen auf das wasserhaltige Wasserglas erreicht. Höhere Füllstoffgehalte wären bevorzugt, lassen sich aber aufgrund der erhöhten Viskosität schlecht bis gar nicht verarbeiten. Üblicherweise weist die Wasserglasschicht einen mineralischen Füllstoffgehalt von bis zu ca. 60 %, insbesondere bis zu ca. 56 %, bezogen auf den Gesamtfeststoffgehalt der Wasserglas-Suspension, resp. nach Trocknung in der fertigen Funktionsschicht, eines mineralischen Füllstoffs auf, insbesondere ca. 55.5 %. Hoch mit mineralischen Füllstoffen gefülltes Wasserglas ist speziell bevorzugt. Ebenfalls bevorzugt ist ein Wasserglas mit geringer Schrumpfung bei Trocknung.
Neben den mineralischen Füllstoffen können auch organische Füllstoffe vorhanden sein. Diese dienen beispielsweise der Steuerung des Trocknungsverhaltens und werden in der wässrigen Wasserglas-Suspension in Mengen von bis zu ca. 5 %, insbesondere in Mengen von bis zu ca. 4 %, insbesondere in Mengen von ca. 4 % eingesetzt, resp. - bezogen auf den Gesamtfeststoffgehalt resp. die ausgehärtete Schicht - in Mengen von bis zu ca. 8 %, insbesondere in Mengen von bis ca. 7.5 %, vorzugsweise 7-7.5 %.
Das Silikat macht üblicherweise bis zu 40 % des Gesamtfeststoffgehalts des Wasserglases aus, insbesondere ca. 37 %.
Das gefüllte Wasserglas hat üblicherweise eine Viskosität von 700 bis 1300 mPas, insbesondere ca. 1000 mPas, und wird flächendeckend in einer Menge von 0.1 bis 1 kg m-2 aufgetragen, vorzugsweise in einer Menge von ca. 0.5 kg m-2 bei einer Viskosität von ca. 1000 mPas.
Die Wasserglasschicht (3, 4) hat zusätzliche flammhemmende Wirkung und unterstützt daher die positiven Eigenschaften der erfindungsgemäßen Dämmplatte (1).
Im Gegensatz zum vorstehend genannten Kaolin ist das Wasserglas als Schicht auf der erfindungsgemäßen Dämmplatte aufgebracht, also nicht homogen verteilt. Aufgrund der faserigen Struktur der Trägerplatte wird jedoch eine gewisse Eindringtiefe beobachtet; typischerweise < 4 mm, insbesondere < 2 mm. Dies führt dazu, dass geringe Mengen Wasserglas in der Holzfaserplatte nachgewiesen werden können.

In einer weiteren Ausführungsform enthält die erfindungsgemäße Dämmplatte (1) **Additive,** insbesondere ausgewählt aus der Gruppe umfassend Stärke, Latex, Paraffin, Flockungsmittel. Diese Additive sind auf dem Gebiet bekannt und kommerziell erhältlich. Der Gehalt an Additiven kann vom Fachmann festgelegt werden, typischerweise liegt er bei < 5 %.

In einer weiteren vorteilhaften Ausführungsform ist die erfindungsgemäße Dämmplatte (1) **frei von feuerhemmenden Additiven,** insbesondere frei von Additiven aus der Gruppe der Borsalze oder der Aluminiumphosphate Die erfindungsgemäßen Platten zeigen vorteilhafte Eigenschaften in Bezug auf Brandschutz, so dass auf derartige Additive verzichtet werden kann. Dies ist ein vorteilhaft, sowohl in Bezug auf Herstellungskosten, als auch unter bauphysiologischen und ökologischen Überlegungen.

In einer weiteren vorteilhaften Ausführungsform kann die erfindungsgemässe Dämmplatte zur Verbindung mit weiteren Dämmplatten geeignete Kantenausgestaltungen **("Profilierungen")** aufweisen. Die Erfindung betrifft somit auch eine Dämmplatte wie hier beschrieben, welcher an seinen Schmalseiten mit formschlüssig ineinander greifenden Profilen versehen ist. Solche Profilierungen sind allgemein bekannt. Die Erfindung ist nicht auf spezifische Profilierungen begrenzt; vielmehr können diese in allen gängigen Varianten vorliegen, bspw. in Form von aneinander angepassten Stufen ("Stossleisten") oder in Form von aneinander angepassten Nut-Feder (N+F) Verbindungen. Derartige Elemente werden auch als "Falz" bzw. "Stossfalz" bezeichnet.
Die Herstellung solcher Profile ist an sich bekannt und kann nach gängigen mechanischen Bearbeitungsverfahren, z.B. spanabhebenden Verfahren, erzeugt werden.
In einer vorteilhaften Ausführungsform betrifft die Erfindung somit eine Dämmplatte wie hier beschreiben, dadurch gekennzeichnet, dass zwei gegenüberliegende Kanten so ausgebildet sind, dass die eine mindestens eine Nut und die andere mindestens einen Kamm zum Eingriff in die Nut einer weiteren Dämmplatte aufweist.

In einer vorteilhaften Ausführungsform betrifft die Erfindung somit eine Dämmplatte wie hier beschreiben, dadurch gekennzeichnet, dass sie zwei Kanten mit Nuten und zwei Kanten mit Kämmen aufweist, wobei die beiden Kanten mit Nuten aneinander stoßende Kanten sind und die Kanten mit Kämmen aneinander stoßende Kanten sind. Vorteilhaft sind die Nuten und Kämme der Dämmplatten derart gestaltet, dass die Kämme der einen Dämmplatte in die Nuten einer identisch gestalteten Dämmplatte dichtend eingreifen können.

Besonders geeignete Dämmplatten werden nachstehend beschrieben:
In einer besonders vorteilhaften Ausführungsform betrifft die Erfindung eine Dämmplatte wie hier beschrieben, dadurch gekennzeichnet, dass die Trägerplatte (2) die folgenden Komponenten enthält oder daraus besteht: lignocellulosehaltiges Material, insbes. Holzfasern, zu 70-100 %; Wasserglas zu 0-25 %; Kaolin zu 5-30 %; Additive ausgewählt aus der Gruppe Stärke, Latex, Paraffin, und Flockungsmittel zu insgesamt 0-5%.
In einer weiteren besonders vorteilhaften Ausführungsform betrifft die Erfindung eine Dämmplatte wie hier beschrieben, dadurch gekennzeichnet, dass die Beschichtung (3,4) die folgenden Komponenten enthält oder daraus besteht: Wasserglas.
In einer weiteren besonders vorteilhaften Ausführungsform betrifft die Erfindung eine Dämmplatte wie hier beschrieben, dadurch gekennzeichnet, die Beschichtung (3, 4) Wasserglas in einer Menge von 200 - 700 g/m³ enthält und das besagtes Wasserglas homogen auf der Oberfläche dieser Trägerplatte verteilt ist.
In einer weiteren besonders vorteilhaften Ausführungsform betrifft die Erfindung eine Dämmplatte wie hier beschrieben, dadurch gekennzeichnet, die Trägerplatte (2) eine einschichtige Holzfaserplatte mit einer Dicke von 10 - 30 mm und eine Rohdichte von 180 - 350, bevorzugt 180 - 220 kg/m³ ist und die Beschichtung (3, 4) Wasserglas in einer Menge von 200 - 700 g/m³ enthält und das besagtes Wasserglas homogen auf der Oberfläche dieser Trägerplatte verteilt ist
In einer weiteren besonders vorteilhaften Ausführungsform betrifft die Erfindung eine Dämmplatte wie hier beschrieben, dadurch gekennzeichnet, die Trägerplatte (2) eine mehrschichtige Holzfaserplatte mit einer Dicke von 30 - 60 mm und eine Rohdichte von 180 - 350, bevorzugt 180 - 220 kg/m³ ist und die Beschichtung (3, 4) Wasserglas in einer Menge von 200 - 700 g/m³ enthält und das besagtes Wasserglas homogen auf der Oberfläche dieser Trägerplatte verteilt ist.

In einem **zweiten Aspekt** betrifft die Erfindung ein Verfahren zur Herstellung einer Dämmplatte wie hier beschrieben umfassend die Schritte (a) Bereitstellung eines lignocellulose-haltingen Vorläufermaterials enthaltend: Holzfasern, Wasser, ggf. Additive, (b) Zudosierung und homogene Verteilung von Kaolin in diesem Vorläufermaterial; (c) Bildung eines Faserformstranges; (d) ggf. Formen, Entwässern ggf. Aufgiessen von Wasserglas und ggf. Trocknen; (e) ggf. Konfektionierung und ggf. Aufgiessen von Wasserglas.

Dieser Aspekt der Erfindung soll nachstehend näher erläutert werden; die Schritte (a), (c), (d), (e) sind an sich aus der Produktion von Holzweichfaserplatten bekannt und können auf das erfindungsgemäße Verfahren angewendet werden. Entsprechend werden in einer vorteilhaften Ausführungsform die Schritte b, c, und d, insbesondere alle Schritte a bis e, kontinuierlich durchgeführt.
Schritt (a): Dieser Schritt ist an sich bekannt bei der Herstellung von Holzweichfaserplatten. Vorteilhaft enthält das Vorläufermaterial die Komponenten wie vorstehend aufgeführt.
Schritt (b): Vorteilhaft wird in diesem Schritt das Vorläufermaterial turbulent durch ein Rohr transportiert und eine wässrige Suspension enthaltend Kaolin über Düsen zudosiert.
Schritt (c): Dieser Schritt ist an sich bekannt, und kann auf den bekannten Anlagen durchgeführt werden.
Schritt (d): Dieser Schritt ist an sich bekannt, und kann auf den bekannten Anlagen durchgeführt werden.
Schritt (e): Das Konfektionieren kann eine Vielzahl von einzelnen Schritten umfassen, diese sind als (e1), (e2) bezeichnet.
   (e1) Beschichtung mit Wasserglas bzw. wasserglashaltiger Komponente: In einer vorteilhaften Ausführungsform wird Wasserglas (bzw. eine Wasserglas enthaltende Zusammensetzung) als Beschichtung aufgebracht. Dies kann mittels üblicher Giessverfahren, bspw. 200-700 g/m2, geschehen. Durch diese Verfahrensweisen wird eine untrennbare Verbindung von Beschichtung mit der Trägerplatte erreicht.
      Ferner kann in Schritt (e1) eine einseitige, eine beidseitige oder eine mittige Beschichtung des entwässerten Faserformstrangs mit Wasserglas erfolgen.
      In einer Ausführungsform wird in einem Gießverfahren Wasserglas auf den nassen Plattenformstrang aufgebracht und nachfolgenden getrocknet. Typischerweisse hat in dieser Ausführungsform die vorgeformte Holzfaserplatte einen Wassergehalt von 50%, wird an der Oberfläche mit Wasserglas 200 - 700 g/m2 versiegelt und nachfolgend kontinuierlich getrocknet.
      In einer alternativen Ausführungsform wird in einem Gießverfahren Wasserglas auf den trockenen Plattenformstrang aufgebracht.
   (e2) Nut-Feder-Bildung: Nuten und Federn können nach an sich bekannten Methoden angebracht werden. Wegen der verbesserten mechanischen Eigenschaften der erfindungsgemäßen Dämmplatten ist dies vereinfacht und mit höherer Präzision möglich. Wie erwähnt ist dieser Schritt nicht notwendig, auch stumpfe Dämmplatten weisen die vorstehend genannten Vorteile auf.

In einem **dritten Aspekt** betrifft die Erfindung die Verwendung der hier beschriebenen Dämmplatten, sowie Bauelemente umfassend eine Vielzahl von Dämmplatten wie hier beschrieben und ggf. Verbindungsmaterial. Vorteilhafte Ausführungsformen und Merkmale dieses Aspektes sollen nachstehend erläutert werden.

Der Begriff "Bauelement" ist an sich bekannt und umfasst insbesondere Wände, Mauern, Stützen, Träger, Treppen von Bauwerken, sowie Teile davon. Somit betrifft die Erfindung Bauelemente, welche für die Erstellung von Gebäuden, insbesondere als tragende Wände, aussteifende Wände, nichttragende Wände, Dachverkleidung, ausgestaltet sind, umfassend eine Vielzahl von Dämmplatten wie hier beschrieben und ggf. Verbindungsmaterial. Ferner betrifft die Erfindung Bauelemente wie hier beschrieben, welche als Aussenwand oder als Innenwand eines Gebäudes ausgestaltet sind. Eine "Wand" bezeichnet im Zusammenhang mit der vorliegenden Erfindung einen Baukörper in Form einer vertikalen Scheibe, deren Länge und Höhe deutlich größer ist als deren Dicke (insbesondere >5), insbesondere eine Gebäudewand, wie Außenwand und Innenwand.

Die erfindungsgemäßen Dämmplatten sind somit vielseitig anwendbar und können die bekannten Dämmplatten in praktisch allen Anwendungen ersetzen; aufgrund ihrer Feuerbeständigkeit erschließen sich ferner Anwendungen, denen die bekannten Dämmplatten aus Holzweichfasern bisher verwehrt waren.

Die Erfindung betrifft insbesondere die Verwendung von Dämmplatten wie hier beschrieben als als Dachplatte, insbesondere als statisch wirksame Dachplatte.

Die Erfindung betrifft ferner die Verwendung von Dämmplatten wie hier beschrieben (i) als innenseitige Verkleidung eines Schrägdachs; (ii) als Verkleidung einer Trennwand; (iii) als Verkleidung eines Trempels (Kniestocks); (iv) als Innendämmung der Aussenwand eines Gebäudes; (v) als Akustikplatte; (vi) als Basisplatte für den Holzausbau; (vii) als Sandwichplatte für den Fahrzeugbau, insbesondere als Platte für den Ausbau von Caravans und / oder geschlossenen Anhängern.

Die nachstehend genannten **Beispiele** dienen der weiteren Erläuterung der Erfindung; sie sollen die Erfindung in keiner Weise limitieren.

### Beispiel 1: Herstellung einer einlagigen Dämmplatte

Eine Holzfaserplatte wurde bei einem Betriebsversuch hergestellt. Das Kaolin wurde erfindungsgemäss in einer Suspension zugegeben und hatte dabei die folgenden Eigenschaften:

| | |
|---|---|
| Weissgehalt: | 80% |
| Nasssiebrückstand: | >45 Micrometer: 0.03%% |
| Korngrössenverteilung: | > 2 Micrometer: 53% |
| | > 1 Micrometer: 36% |
| Apect ration: | 28:1 |

Die so erhaltene Platte hatte folgende Eigenschaften:

| | |
|---|---|
| Rohdichte: | 320 kg/m3 |
| Dicke: | 20 mm |
| Druckspannung: | 247 kPa |
| Zugfestigkeit senkrecht: | 54 kPa |
| Biegefestigkeit: | 1, 2 N/mm2 |

Eine vergleichbare hergestellte Platte ohne die o.g. Kaolinzugabe hat die folgenden Eigenschaften:

| | |
|---|---|
| Rohdichte: | 220 kg/m3 |
| Dicke: | 20 mm |
| Druckspannung: | 150kPa |
| Zugfestigkeit senkrecht: | 20kPa |
| Biegefestigkeit: | 1,0 N/mm2 |

Durch die Kaolinzugabe erhöhte sich die Rohdichte und mechanische Festigkeit deutlich und lag damit über der für im Nassverfahren hergestellte Platten üblichen Mass. Somit konnte auf einfache Weise die Rohdichte und die mechanischen Festigkeiten erhöht werden.

### Beispiel 2: Herstellung einer einseitig beschichteten Dämmplatte

Eine Holzfaserplatte wurde bei einem Betriebsversuch hergestellt. Das Kaolin wurde erfindungsgemäss in einer Suspension zugegeben und hatte dabei die folgenden Eigenschaften:

| | |
|---|---|
| Weissgehalt: | 80 % |
| Nasssiebrückstand: | >45 Micrometer: 0.03%% |
| Korngrössenverteilung: | > 2 Micrometer: 53% |
| | > 1 Micrometer: 36% |
| Apect ration: | 28:1 |

Vor der Plattenaushärtung im Trockner wurde eine Wasserglassschicht auf die Fasermatte gegossen (ca. 700 g/m²). Das verwendete Wasserglas hatte folgende Eigenschaften:
Natriumwasserglas mit mineralischer Füllung und einem Molverhältnis: Na2O: SiO2 1: >2,5 - <3,2 und einer Dichte von: 1,5 kg/l

Die Platten hatten folgende Eigenschaften:

| | |
|---|---|
| Rohdichte: | 350 kg/m3 |
| Dicke: | 17 mm |
| Druckspannung: | 270 kPa |
| Zugfestigkeit senkrecht: | 34 kPa |
| Biegefestigkeit: | 1,9 N/mm2 |

Durch die Wasserglasbeschichtung vor der Plattentrocknung konnte eine sehr gute Verbindung der Beschichtung mit der Plattenoberfläche erreicht werden.

Die fertiggestellte Platte zeigte ein deutlich verbessertes Verhalten gegenüber direkter Beflammung gegenüber einer entsprechenden unbeschichteten, Wasserglasfreien Platte.
Nach der Beflammung entstanden keine, bei Standard-Holzfaserplatten übliche, Glutnester.

## Patentansprüche

1. Dämmplatte (1), umfassend eine Trägerplatte (2), ggf. eine erste Beschichtung (3) und ggf. eine zweite Beschichtung (4), **dadurch gekennzeichnet, dass** die Trägerplatte (2)
▪ eine ein- oder mehrschichtige Holzfaserplatte mit einer Dicke von 8 - 60 mm und eine Rohdichte von 180 - 350 kg/m³ ist;
▪ Kaolin in einer Menge von 5-30 % enthält welches homogen in dieser Trägerplatte verteilt ist.

2. Dämmplatte nach Anspruch 1, **dadurch gekennzeichnet, dass** eine erste Beschichtung (3) und ggf. eine zweite Beschichtung (4) vorhanden ist und dass besagte Beschichtung Wasserglas enthält bzw. aus Wasserglas besteht.

3. Dämmplatte nach Anspruch 2, **dadurch gekennzeichnet, dass** das Wasserglas der Beschichtung (3, 4) eine Eindringtiefe in die Trägerplatte (2) < 4 mm.

4. Dämmplatte nach einem der Ansprüche 1 oder 2, **dadurch gekennzeichnet,**
**dass** die Trägerplatte (2) die folgenden Komponenten enthält oder daraus besteht:
▪ lignocellulosehaltiges Material, insbes. Holzfasern, zu 70-100 %
▪ Wasserglas zu 0-25 %;
▪ Kaolin zu 5-30 %;
▪ Additive zu 0-5%;
und / oder dass die Beschichtung (3,4) die folgenden Komponenten enthält oder daraus besteht:
▪ ungefülltes Wasserglas; oder
▪ gefülltes Wasserglas.

5. Dämmplatte (1), nach einem der Ansprüche 1 bis 4,
**dadurch gekennzeichnet, dass**
▪ die Trägerplatte (2) eine einschichtige Holzfaserplatte mit einer Dicke von 8 - 60 mm und eine Rohdichte von 180 - 350 kg/m³ ist; oder
▪ die Trägerplatte (2) eine mehrschichtige Holzfaserplatte mit einer Dicke von 30 - 60 mm und eine Rohdichte von 180 - 350 kg/m³ ist; und
▪ die Beschichtung (3, 4) Wasserglas in einer Menge von 200-700 g/m³ enthält und dass besagtes Wasserglas homogen auf der Oberfläche dieser Trägerplatte verteilt ist.

6. Dämmplatte nach einem der vorgängigen Ansprüche, **dadurch gekennzeichnet, dass** zwei gegenüberliegende Kanten so ausgebildet sind, dass die eine mindestens eine Nut und die andere mindestens einen Kamm zum Eingriff in die Nut einer weiteren Dämmplatte aufweist.

7. Dämmplatte gemäss Anspruch 7, **dadurch gekennzeichnet, dass** sie zwei Kanten mit Nuten und zwei Kanten mit Kämmen aufweist, wobei die beiden Kanten mit Nuten aneinander stossende Kanten sind und die Kanten mit Kämmen aneinander stossende Kanten sind, insbesondere dass die Kämme der einen Dämmplatte in die Nuten einer identisch gestalteten Dämmplatte dichtend eingreifen können.

8. Verfahren zur Herstellung einer Dämmplatte nach Anspruch 1 bis 7 umfassend die Schritte
(a) Bereitstellung eines lignocellulose-haltingen Vorläufermaterials enthaltend: Holzfasern, Wasser, ggf. Additive, ggf. Wasserglas;
(b) Zudosierung und homogene Verteilung von Kaolin in diesem Vorläufermaterial;
(c) Bildung eines Faserformstranges;
(d) ggf. Formen, Entwässern und ggf. Trocknen;
(e) ggf. Konfektionierung.

9. Verfahren gemäss Anspruch 10, in welchem die Schritte b, c, und d, insbesondere alle Schritte a bis e, kontinuierlich durchgeführt werden.

10. Verfahren zur Herstellung einer Dämmplatte nach Anspruch 8 oder 9, **dadurch gekennzeichnet, dass** Schritt (e) das einseitige oder beidseitige Beschichten des entwässerten Faserformstrangs mit Wasserglas umfasst.

11. Verfahren zur Herstellung einer Dämmplatte (1) nach einem der Ansprüche 9 bis 10, **dadurch gekennzeichnet, dass** in Schritt (b) das Vorläufermaterial turbulent durch ein Rohr transportiert und eine wässrige Suspension enthaltend Kaolin über Düsen zudosiert wird.

12. Verfahren zur Herstellung einer Dämmplatte (1) nach einem der Ansprüche 9 bis 11, **dadurch gekennzeichnet, dass** in Schritt (a) ...

13. Verwendung einer Dämmplatte nach einem der Ansprüche 1 bis 7
▪ als Dachplatte, insbesondere als statisch wirksame Dachplatte;
▪ als innenseitige Verkleidung eines Schrägdachs;
▪ als Verkleidung einer Trennwand;
▪ als Verkleidung eines Trempels;
▪ als Innendämmung der Aussenwand eines Gebäudes;
▪ als Akustikplatte;
▪ als Basisplatte für den Holzausbau;
▪ als Sandwichplatte für den Fahrzeugbau, insbesondere als Platte für den Ausbau von Caravans und / oder geschlossenen Anhängern.

14. Bauelement oder Fahrzeug, umfassend eine Vielzahl von Dämmplatten nach einem der Ansprüche 1 - 7 und ggf. Verbindungsmaterial.
